# EUROPÄISCHE PATENTSCHRIFT

(11) **EP 3 386 892 B1**
(45) Veröffentlichungstag und Bekanntmachung des Hinweises auf die Patenterteilung: **17.06.2020**
(21) Anmeldenummer: 16778324.0
(22) Anmeldetag: 04.10.2016
(51) Int. Cl.: B65G 21/20, B65G 47/84, B67C 7/00

(54) **BEHANDLUNGSMASCHINE FÜR BEHÄLTER**
MACHINE FOR HANDLING CONTAINERS
MACHINE DE TRAITEMENT DE RÉCIPIENTS

(30) Priorität: 09.12.2015 DE 102015224731
(43) Veröffentlichungstag der Anmeldung: 17.10.2018
(73) Patentinhaber: Krones AG, 93073 Neutraubling (DE)
(72) Erfinder: KRAUS, Andreas, 93073 Neutraubling (DE); KIENER, Markus, 93073 Neutraubling (DE)
(74) Vertreter: Grünecker Patent- und Rechtsanwälte PartG mbB
(86) Internationale Anmeldenummer: PCT/EP2016/073593
(87) Internationale Veröffentlichungsnummer: WO 2017/097453

(56) Entgegenhaltungen:
- EP-A2- 2 269 923
- DE-A1- 3 809 294
- DE-A1-102008 022 705
- DE-C- 431 573
- FR-A1- 2 775 270
- US-A- 1 556 991
- US-A- 4 053 003
- US-A- 5 713 180
- US-A1- 2011 127 143

## Beschreibung

Die Erfindung betrifft eine Behandlungsmaschine für Behälter nach dem Oberbegriff des Anspruchs 1 und ein Verfahren zum entsprechenden Zuführen der Behälter.

Behandlungsmaschinen für Behälter, wie Etikettiermaschinen oder Direktdruckmaschinen, werden zugunsten einer hohen Maschinenleistung in der Regel als Rundläufermaschinen ausgebildet. Zugehörige Transporteinrichtungen, wie beispielsweise Einteilschnecken, Einlaufsternräder, Auslaufsternräder und Transportbänder, werden im Wesentlichen in vier typischen Anordnungen an den Rundläufermaschinen aufgestellt. Unterschieden wird hierbei zwischen seitlicher Standardaufstellung, Parallelaufstellung, Frontalaufstellung und Winkelaufstellung.

Bei der Standardaufstellung erfolgen Antransport und Abtransport der Behälter im Wesentlichen in derselben Richtung, wobei Behältereinlauf und Behälterauslauf aus Sicht der antransportierten Behälter hintereinander liegen. Die Parallelaufstellung unterscheidet sich davon lediglich dadurch, dass sich antransportierte und abtransportierte Behälter entgegen kommen. Auch bei der Frontalaufstellung erfolgen Antransport und Abtransport im Wesentlichen in einander entgegengesetzten Richtungen. Allerdings liegen Behältereinlauf und Behälterauslauf aus Sicht der antransportierten Behälter dann nebeneinander, wie dies beispielsweise aus der DE 197 51 576 A1 bekannt ist. Bei der Winkelaufstellung erfolgen Antransport und Abtransport im Wesentlichen in zueinander orthogonalen Richtungen.

Zur Einteilung der Behälter auf eine an die Behandlungsmaschine angepasste Transportteilung dient üblicherweise eine Einteilschnecke, die bei der Standardaufstellung durch ein Einlaufsternrad und ein Auslaufsternrad zur Übergabe der Behälter ergänzt wird. Bei der Frontalaufstellung ist jeweils ein zusätzliches Auslaufsternrad im Einlaufbereich und im Auslaufbereich erforderlich. Bei einer Winkelaufstellung oder Parallelaufstellung wird ein zusätzliches Auslaufsternrad im Auslaufbereich oder im Einlaufbereich benötigt.

Bei Frontalaufstellungen, Parallelaufstellungen und Winkelaufstellungen werden somit zusätzliche Sternräder benötigt, gegebenenfalls auch zusätzliche Behälterführungen an Überschüben, die den Anschluss zu Transportbändern herstellen. Dieser apparative Aufwand ist besonders nachteilig, wenn unterschiedliche Behälterformate verarbeitet werden sollen und eine entsprechende Anpassung von Transportmitteln erforderlich wird. Die Behälterführungen sind dann beispielsweise auswechselbare Garniturenteile in Form von Führungsschienen oder Führungsgeländer. Die Sternräder können kranzförmige Garniturenteile mit entsprechend an das Behälterformat angepassten Transportaschen umfassen.

Ferner hat es sich herausgestellt, dass bei der Vereinzelung an Einteilschnecken durch die dort verursachte Abwälzung Riefen oder anderweitige Beschädigungen an den Oberflächen von Kunststoffbehältern auftreten können.

Nachteilig ist ferner der zusätzliche Platzbedarf bei Frontalaufstellung, Parallelaufstellung und Winkelaufstellung aufgrund der Vielzahl benötigter Transportmittel, wie beispielsweise Sternräder.

Aus US 1 556 9 91 A nach dem Oberbegriff des Anspruchs 1, ist ferner eine Füllmaschine mit einem Füllerkarussell und daran umfänglich verteilten Hubeinheiten für die Behälter bekannt. Diese laufen unter Staudruck auf einem geradlinigen Förderband ein und werden von diesem durch eine gekrümmte Führungsschiene zu einem Sägezahnstern geleitet, der auf einem Vortisch des Füllerkarussells angeordnet ist, die Behälter über den Vortisch schiebt und die Transportteilung herstellt. Die Behälter werden dabei außen von einer den Sägezahnstern umgebenden ersten Führungsschiene bis auf die Hubeinheiten geführt. Der Anstellwinkel der ersten Führungsschiene an ihrem ausgangsseitigen Endabschnitt weist darauf hin, dass die Behälter nicht tangential an das Karussell übergeben werden, sondern schräg darauf zu. Anschließend werden die Behälter von den Hubeinheiten in Transportrichtung des Karussells mitgenommen und von einer am Karussell außen entlanglaufenden zweiten Führungsschiene vorübergehend gegen die dort wirkende Fliehkraft seitlich abgestützt.

Es besteht daher Bedarf für Behandlungsmaschinen in Frontalaufstellung, Parallelaufstellung oder Winkelaufstellung, bei denen sich wenigstens eines der obigen Probleme beseitigen oder zumindest abmildern lässt.

Die gestellte Aufgabe wird mit einer Behandlungsmaschine für Behälter, insbesondere Kunststoffbehälter, nach Anspruch 1 gelöst. Demnach umfasst diese einen insbesondere kontinuierlich drehbaren Behandlungstisch und einen Behältereinlauf in Frontalausrichtung oder Parallelausrichtung. Ferner umfasst die Behandlungsmaschine ein Sägezahnsternrad, das zum Vereinzeln einlaufender Behälter auf die Transportteilung des Behandlungstisches und zur tangentialen Übergabe der Behälter an den Behandlungstisch ausgebildet ist. Ferner ist ein Einlauftransportband mit wenigstens einer seitlichen Behälterführung zur Übergabe der Behälter an das Sägezahnsternrad vorhanden.

Eine Frontalaufstellung liegt bei einem Behältereinlauf in Frontalausrichtung und einem Behälterauslauf in Frontalausrichtung vor, eine Parallelaufstellung insbesondere bei einem Behältereinlauf in Parallelausrichtung und einem Behälterauslauf in seitlicher Standardausrichtung, eine Winkelaufstellung insbesondere bei einem Behältereinlauf in Frontalausrichtung und einem Behälterauslauf in seitlicher Standardausrichtung.

Unter einem Behältereinlauf in Frontalausrichtung ist zu verstehen, dass der Sägezahnstern (Einlaufstern) und der Auslaufstern aus Sicht der zugeförderten Behälter nebeneinander angeordnet sind. Unter einem Behältereinlauf in Parallelausrichtung ist zu verstehen, dass die zugeförderten Behälter den abtransportierten Behältern entgegenkommen und zuerst am Auslaufstern vorbeilaufen, bevor sie zum Sägezahnstern geleitet werden.

Das Sägezahnsternrad definiert beispielsweise mit einer stationären äußeren Behälterführung in Kreisbogenform einen Einlaufteilkreis, der tangential an den Behandlungsteilkreis des Behandlungstisches anschließt.

Das Sägezahnsternrad hat definitionsgemäß eine Vielzahl von Sägezähnen, deren Flanken dazwischen liegende Transportaschen für die Behälter ausbilden.

Die Sägezähne haben je eine als Zahnbrust wirkende steile Flanke und eine demgegenüber flachere und als Zahnrücken wirkende Flanke. Die Zahnbrüste bzw. steilen Flanken bilden die in Transportrichtung hinteren Wände der Transportaschen aus. Zwischen den steilen und den flacheren Flanken sind Zahnspitzen derart ausgebildet, dass die Sägezähne zwischen je zwei unter Staudruck einlaufende Behälter eingreifen und die Behälter in den Transporttaschen mitnehmen.

Der Abstand der Transporttaschen voneinander entspricht der Transportteilung des Behandlungstisches.

Somit eignet sich das Sägezahnsternrad sowohl für die schonende Vereinzelung und Einteilung der Behälter entsprechend der Transportteilung des Behandlungstisches als auch für den tangentialen Antransport der Behälter an den Behandlungsteilkreis des Behandlungstisches.

Erfindungsgemäß verlaufen das Einlauftransportband und die Behälterführung mit seitlicher Krümmung zum Sägezahnsternrad hin. Das Einlauftransportband ist derart ausgebildet, dass es zusammen mit dem Einlaufteilkreis des Sägezahnsternrads eine S-förmige Transportbahn für die Behälter festlegt. Oberhalb des Einlauftransportbands sind dann vorzugsweise stationäre und entsprechend seitlich gekrümmte Behälterführungen befestigt. Dies ermöglicht einen Behältereinlauf in Frontalausrichtung oder Parallelausrichtung mit einem geringen apparativen Aufwand und einen einfachen Formatwechsel.

Vorzugsweise ist das Einlauftransportband in Form aneinandergereihter Bogensegmente mit insbesondere unterschiedlichen Krümmungsradien ausgebildet. Beispielsweise lässt sich das Einlauftransportband dann aus mehreren Kreisbogensegmenten modular zusammensetzen. Vorzugsweise weist das Einlauftransportband eine derartige Krümmung auf, dass die Transportbahn der Behälter bei der Übergabe an das Sägezahnsternrad in der Draufsicht in einem Winkel von 5° bis 90°, insbesondere 15 bis 85°, bezüglich Frontalrichtung verläuft. Dies ermöglicht einen platzsparenden Einlaufbereich der Behandlungsmaschine.

Vorzugsweise ist die seitliche Behälterführung derart ausgebildet, dass sie die Behälter bei der Übergabe an das Sägezahnsternrad zuerst gegen daran ausgebildete Zahnrücken führt. Anschließend rutschen die Behälter von den Zahnrücken entlang der Behälterführung in Transporttaschen des Sägezahnsterns. Dies erleichtert ein sanftes Eingreifen der Sägezähne zwischen aufeinanderfolgende Behälter und ermöglicht eine für die Behälter schonende Einteilung auf die Transportteilung der Behandlungsmaschine.

Vorzugsweise ist das Einlauftransportband als horizontal bogengängige Transportkette ausgebildet, insbesondere mit um vertikale Achsen schwenkbaren Kettengliedern. Die Kettenglieder sind vorzugsweise plattenförmig. Somit lässt sich ein Transportbandbogen mit horizontaler Standfläche für die Behälter bereitstellen. Die Transportkette läuft dann gegebenenfalls entlang zwei oder mehrerer Kreisbogensegmente.

Vorzugsweise verläuft ein eingangsseitiger Abschnitt des Einlauftransportbands in Frontalrichtung. Dies erleichtert den Anschluss des Einlauftransportbands an in Frontalrichtung verlaufende Fördereinrichtungen.

Vorzugsweise umfasst die Behandlungsmaschine einen Behälterüberschub, an dem das Einlauftransportband an ein stromaufwärts in Frontalrichtung verlaufendes Zuförderband anschließt. Dies ermöglicht eine einfache und hinsichtlich unterschiedlicher Behälterformate flexible Anbindung des Behältereinlaufs an Zufördereinrichtungen. Beispielsweise lassen sich seitliche Behälterführungen im Bereich des Überschubs als schnellwechselbare Garniturenteile ausbilden und mit geringem Aufwand austauschen.

Vorzugsweise ist das Zuförderband derart antreibbar, dass es im Behandlungsbetrieb schneller läuft als das Sägezahnsternrad, insbesondere um mindestens 5%.schneller. Vorzugsweise ist das Zuförderband ferner derart antreibbar, dass es im Behandlungsbetrieb schneller läuft als das Einlauftransportband, insbesondere um mindestens 5%.schneller. Dadurch lässt sich ein Staudruck vor dem Sägezahnsternrad besonders exakt und gegebenenfalls mit einer vorgelagerten Staudruckstufe am Überschub einstellen.

Vorzugsweise ist das Einlauftransportband derart angetrieben und gesteuert, dass es im Arbeitsbetrieb schneller läuft als das Sägezahnsternrad, insbesondere um höchstens 5%. Dadurch können die Behälter bis in den Bereich des Sägezahnsternrads unter Staudruck antransportiert und ohne Lücken im Behälterstrom schonend vereinzelt und auf Transportteilung gebracht werden.

Vorzugsweise umfasst die Behandlungsmaschine ferner einen Behälterauslauf in Frontalausrichtung. Dadurch lässt sich eine kompakte Behandlungsmaschine in Frontalaufstellung bereitstellen. Insbesondere ist dann im Behälterauslauf ein Auslaufsternrad ausgebildet sowie ein Auslauftransportband, das mit seitlicher Krümmung vom Auslaufsternrad weg verläuft. Dies ermöglicht einen kompakten und einfachen Behälterauslauf und erleichtert Formatwechsel.

Das Auslauftransportband ist dann ebenfalls mit seitlicher Krümmung zum Auslaufstern ausgebildet, um damit eine für den Behälter schonende S-förmige Transportbahn zu bilden. Oberhalb des Auslauftransportbands sind dann vorzugsweise stationäre und entsprechend seitlich gekrümmte Behälterführungen befestigt.

Vorzugsweise umfasst die Behandlungsmaschine dann ferner einen Behälterüberschub, an dem das Auslauftransportband an ein stromabwärts in Frontalrichtung verlaufendes Abförderband anschließt. Es lassen sich dann auch im Behälterauslauf die bezüglich des Behälterüberschubs im Einlaufbereich genannten Vorteile erzielen.

Alternativ kann die Behandlungsmaschine einen Behälterauslauf in seitlicher Standardausrichtung umfassen. Dadurch lässt sich eine kompakte Behandlungsmaschine in Winkelaufstellung bereitstellen. Insbesondere ist dann im Behälterauslauf ein Auslaufsternrad ausgebildet sowie ein Auslauftransportband, das geradlinig vom Auslaufsternrad weg verläuft.

Vorzugsweise ist für das Einlauftransportband und das Auslauftransportband ein gemeinsamer Antriebsmotor vorhanden. Dies reduziert den apparativen Aufwand. Damit lässt sich dennoch der Staudruck im Einlaufbereich des Sägezahnsternrads unabhängig von der Transportgeschwindigkeit des Behandlungstisches einstellen. Alternativ können auch separate Antriebsmotoren für das Einlauftransportband und das Auslauftransportband vorhanden sein, um eine besonders flexible Einstellung der Transportgeschwindigkeiten zu ermöglichen.

Die gestellte Aufgabe wird ebenso mit einem Verfahren nach Anspruch 13 zum Zuführen eines in Frontalausrichtung einlaufenden Stroms aus Behältern zu einem sich drehenden Behandlungstisch gelöst. Demnach werden die Behälter mittels eines Sägezahnsterns von einem mit seitlicher Krümmung zum Sägezahnsternrad verlaufenden Einlauftransportband unter Staudruck einzeln übernommen, in Transporttaschen des Sägezahnsterns auf eine Transportteilung des Behandlungstisches gebracht und tangential an den Behandlungstisch geführt. Die Behälter sind vorzugsweise Kunststoffbehälter, insbesondere Kunststoffflaschen. Das Einlauftransportband legt mit dem Einlaufteilkreis des Sägezahnsternrads eine S-förmige Transportbahn für die Behälter fest.

Somit laufen die Behälter bei der Übernahme vom Einlauftransportband auf den Transporttaschen jeweils vorauslaufenden Flanken bzw. Zahnrücken des Sägezahnsterns auf und werden von einer am Einlauftransportband ausgebildeten und mit der seitlichen Krümmung zum Sägezahnsternrad verlaufenden seitlichen Behälterführung in die Transporttaschen geleitet. Dies ermöglicht eine schonende Behälterübergabe und Vereinzelung. Ein definierter Staudruck wird vorzugsweise durch ein Transportgeschwindigkeitsgefälle vom Einlauftransportband zum Sägezahnstern erzeugt.

Bevorzugte Ausführungsformen der Erfindung sind in den Zeichnungen dargestellt. Es zeigen:
- Figur 1: eine schematische Draufsicht auf Transporteinrichtungen der Behandlungsmaschine in Frontalaufstellung;
- Figur 2: eine schematische Draufsicht auf Transporteinrichtungen der Behandlungsmaschine in Winkelaufstellung;
- Figur 3: eine schematische Draufsicht auf Transporteinrichtungen der Behandlungsmaschine in Parallellaufstellung;
- Figur 4: eine Draufsicht auf einen Teilbereich der Behandlungsmaschine in Frontalaufstellung; und
- Figur 5: eine schematische Draufsicht auf den Einlaufbereich eines Sägezahnsterns.

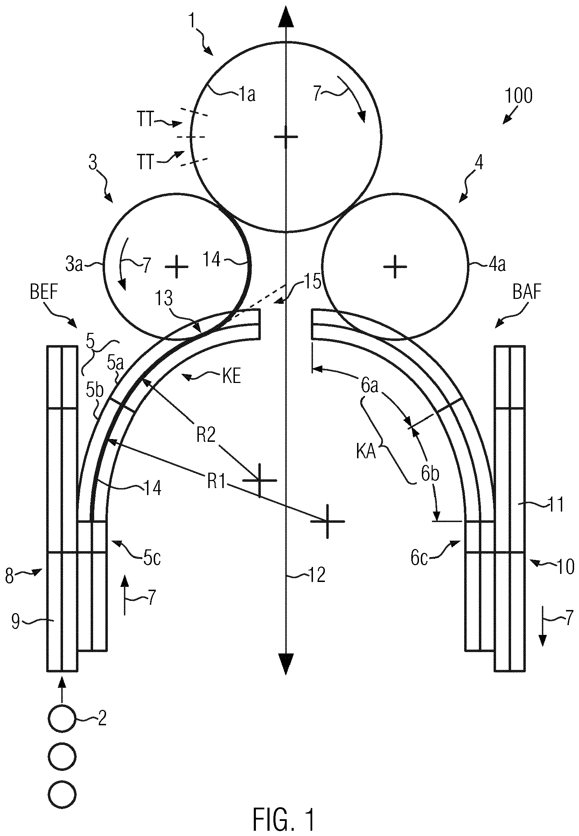

Wie die Figur 1 in stark schematisierter Darstellung von Transportmitteln der Behandlungsmaschine erkennen lässt, umfasst diese bei einer ersten Ausführungsform 100 in Frontalaufstellung einen drehbaren Behandlungstisch 1 für Behälter 2, ein einlaufseitiges Sägezahnsternrad 3 und ein Auslaufsternrad 4. Diese Transportmittel sind in der Figur 1 stellvertretend durch einen Behandlungsteilkreis 1a des Behandlungstisches 1, einen Einlaufteilkreis 3a des Sägezahnsternrads 3 und einen Auslaufteilkreis 4a des Auslaufsternrads 4 dargestellt. Der Behandlungsteilkreis 1a schließt tangential an den Einlaufteilkreis 3a und den Auslaufteilkreis 4a an.

Die Frontalaufstellung der ersten Ausführungsform 100 ergibt sich definitionsgemäß aus einem Behältereinlauf BEF in Frontalausrichtung und einen Behälterauslauf BAF in Frontalausrichtung.

Die Behandlungsmaschine 1 umfasst ferner ein Einlauftransportband 5, das mit einer ersten seitlichen Krümmung KE zum Sägezahnsternrad 3 hin verläuft, sowie ein Auslauftransportband 6, das mit einer zweiten seitlichen Krümmung KA vom Auslaufsternrad 4 wegverläuft. Das Einlauftransportband 5 umfasst beispielsweise in Transportrichtung 7 seriell angeordnete Bogensegmente 5a, 5b mit vorzugsweise voneinander verschiedenen Krümmungsradien R1, R2. Das Auslauftransportband umfasst beispielsweise seriell angeordnete Bogensegmente 6a, 6b mit vorzugsweise voneinander verschiedenen Krümmungsradien.

Das Einlauftransportband 5 und das Auslauftransportband 6 sind vorzugsweise getrennt voneinander angetrieben. Zum Erzeugen eines Staudrucks im Einlaufbereich des Sägezahnsternrads 3 läuft das Einlauftransportband 5 im Behandlungsbetrieb vorzugsweise um maximal 5%, insbesondere um 1 bis 5%, schneller als das Sägezahnsternrad 3. Das Sägezahnsternrad 3, der Behandlungstisch 1 und das Auslaufsternrad 4 laufen mit derselben Transportgeschwindigkeit, vorzugsweise auch das Auslauftransportband 6.

Einlaufseitig ist ein erster Behälterüberschub 8 ausgebildet, an dem das Einlauftransportband 5 an ein stromaufwärts verlaufendes Zuförderband 9 anschließt. Das Zuförderband 9 läuft im Behandlungsbetrieb vorzugsweise um maximal 15%, insbesondere um 10 bis 15%. schneller als das Sägezahnsternrad 3, Ferner ist auslaufseitig ein zweiter Behälterüberschub 10 ausgebildet, an dem das Auslauftransportband 6 an ein stromabwärts verlaufendes Abförderband 11 anschließt. Vorzugsweise verläuft ein eingangsseitiger Abschnitt 5c des Einlauftransportbands 5 in Frontalausrichtung 12, ebenso ein ausgangsseitiger Abschnitt 6c des Auslauftransportbands 6.

Das Einlauftransportband 5 ist derart gekrümmt, dass sich mit dem an einer Übergabestelle 13 anschließenden Einlaufteilkreis 3a des Sägezahnsternrads 3 eine (in Fig. 1 fett gedruckte) S-förmige Transportbahn 14 bis zum Behandlungstisch 1 ergibt. Dies ermöglicht sowohl eine Vereinzelung der Behälter 2 auf eine Transportteilung TT des Behandlungstisches 1, die durch den Abstand zwischen umfänglich auf dem Behandlungstisch 1 verteilten Drehtellern oder dergleichen Halterungen (nicht dargestellt) für die Behälter 2 vorgegeben ist, als auch eine eingangsseitig und ausgangsseitig tangentiale Übergabe der Behälter 2 zum/vom Sägezahnsternrad 3.

Wie die Figur 1 ferner erkennen lässt, verläuft die einlaufseitige Transportbahn 14 an der Übergabstelle 13 vom Einlauftransportband 5 zum Sägezahnsternrad 3 in einem Winkel 15 von beispielsweise 5° bis 90°, insbesondere 15° bis 85°, bezogen auf die Frontalausrichtung 12.

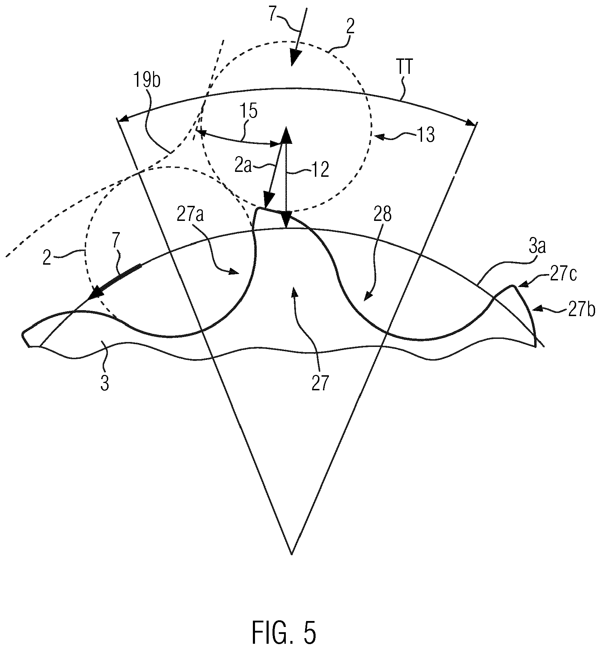

Die Übergabestelle 13 ist diejenige Stelle, an der die Behälter 2 das Sägezahnsternrad 3 unter Staudruck erstmalig berühren, beispielsweise indem sie auf je einem Zahnrücken des Sägezahnsternrads 3 auflaufen, siehe hierzu die Figur 5.

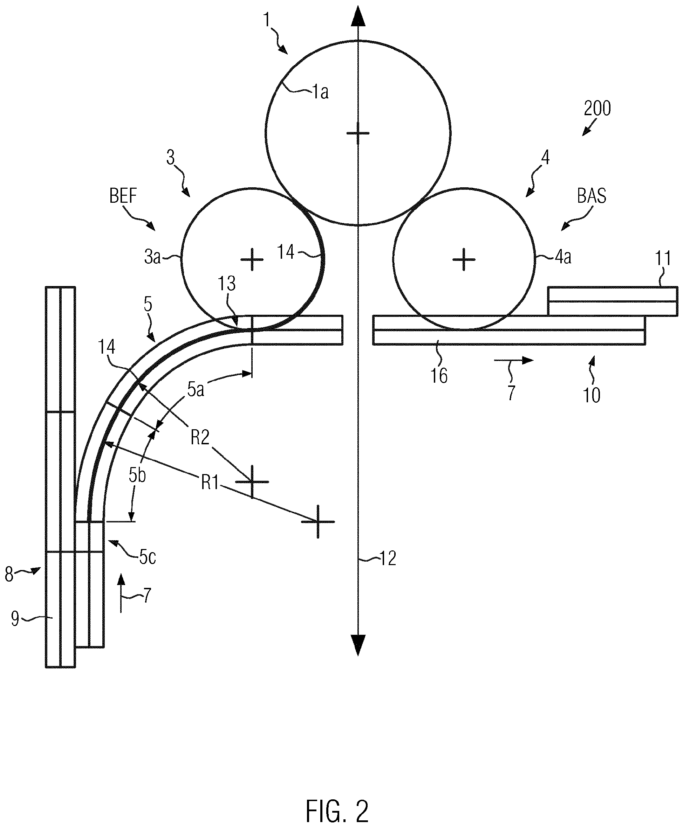

Die Figur 2 zeigt in schematischer Draufsicht eine zweite Ausführungsform 200 der Behandlungsmaschine, die sich von der ersten Ausführungsform 100 durch ihre Winkelaufstellung unterscheidet, wobei der Behältereinlauf BEF in Frontalausrichtung und der Behälterauslauf BAS in seitlicher Standardausrichtung ausgebildet sind. Entsprechend umfasst die zweite Ausführungsform 200 ein geradliniges Auslauftransportband 16, das an dem auslaufseitigen zweiten Behälterüberschub 10 an das Abförderband 11 anschließt.

Die Funktionsweise des Sägezahnsternrads 3 und des Einlauftransportbands 5 sind analog zur ersten Ausführungsform 100. Die Übergabe der Behälter 2 an den Behandlungstisch 1 erfolgt nach Einteilung mittels des Sägezahnsternrads 3 auf gleiche Weise wie bei der ersten Ausführungsform 100.

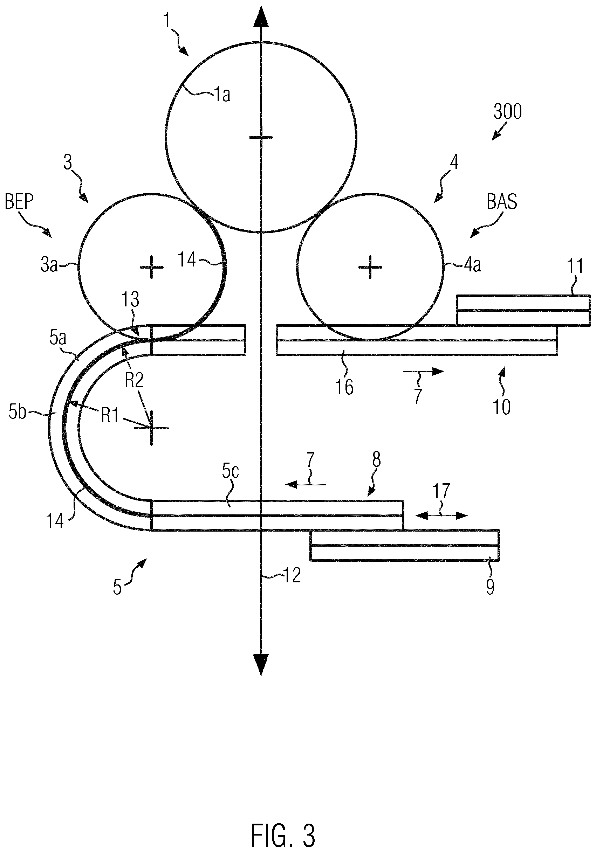

Die Figur 3 zeigt in schematischer Draufsicht eine dritte Ausführungsform 300 der Behandlungsmaschine, die sich von der ersten Ausführungsform 100 durch ihre Parallelaufstellung unterscheidet, wobei der Behältereinlauf BEP in Parallelausrichtung 17 und der Behälterauslauf BAS in seitlicher Standardausrichtung ausgebildet sind. Entsprechend umfasst auch die dritte Ausführungsform 300 ein geradliniges Auslauftransportband 16, das an dem auslaufseitigen zweiten Behälterüberschub 10 an das Abförderband 11 anschließt.

Die Funktionsweise des Sägezahnsternrads 3 und des Einlauftransportbands 5 sind analog zur ersten Ausführungsform 100. Die Übergabe der Behälter 2 an den Behandlungstisch 1 erfolgt nach Einteilung mittels des Sägezahnsternrads 3 auf gleiche Weise wie bei der ersten Ausführungsform 100.

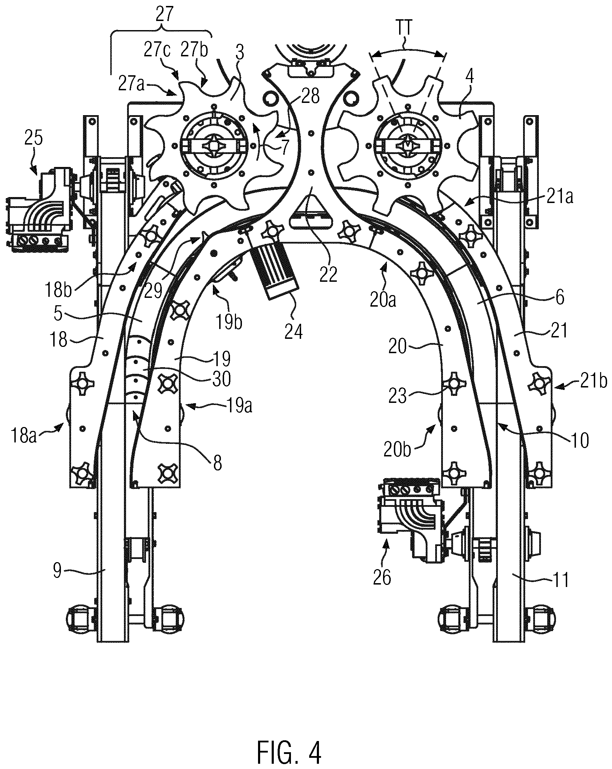

Die Figur 4 verdeutlicht eine konkrete Ausgestaltung der ersten Ausführungsform 100 in Frontalaufstellung. Demnach sind einlaufseitig seitliche Behälterführungen 18, 19 und auslaufseitig seitliche Behälterführungen 20, 21 ausgebildet, insbesondere in Form schnell wechselbarer Schienen. Außerdem ist beispielhaft ein zentrales Führungselement 22 dargestellt, das die Behälter 2 gemeinsam mit dem Sägezahnsternrad 3 entlang der Transportbahn 14 führt und auch mit dem Auslaufsternrad 4 entsprechend zusammenwirkt. Die Behälterführungen 18 bis 22 sind beispielsweise mittels Schnellverschlüssen 23 befestigt und beim Formatwechsel austauschbar.

Vorzugsweise umfassen die Behälterführungen 18, 19 eingangsseitig Abschnitte 18a, 19a zur seitlichen Führung der Behälter 2 im Bereich des ersten Behälterüberschubs 8 und ausgangsseitige Abschnitte 18b, 19b für die seitlich geführte Behälterübergabe an das Sägezahnsternrad 3. Entsprechend umfassen die Behälterführungen 20, 21 eingangsseitige Abschnitte 20a, 21a zur tangentialen Übernahme der Behälter 2 vom Auslaufsternrad 4 und ausgangsseitige Abschnitte 20b, 21b zur seitlichen Führung der Behälter 2 im Bereich des zweiten Behälterüberschubs 10.

Das Einlauftransportband 5 wird im Behandlungsbetrieb vorzugsweise mit einer höheren Transportgeschwindigkeit betrieben als das Sägezahnsternrad 3, um unmittelbar vor dem Sägezahnsternrad 3 einen Staudruck durch Aneinanderschieben der zugeförderten Behälter 2 zu erzeugen. Zu diesem Zweck ist vorzugsweise ein separat ansteuerbarer Antriebsmotor 24 für das Einlauftransportband 5 ausgebildet. Durch elektrische Ansteuerung des Antriebsmotors 24 wird ein Transportgeschwindigkeitsgefälle vom Einlauftransportband 5 zum Sägezahnsternrad 3 individuell eingestellt und damit ein für die Vereinzelung geeigneter Staudruck erzeugt.

Beispielhaft dargestellt sind ferner ein einlaufseitiger Antriebsmotor 25 für das Zuförderband 9 und ein auslaufseitiger Antriebsmotor 26 für das Auslauftransportband 6 und das Abförderband 11. Um einen Staudruck im Bereich des Sägezahnsternrads 3 zu erzeugen, wäre es auch denkbar, den separaten Antriebsmotor 24 funktional durch ein Übersetzungsgetriebe (nicht dargestellt) eine Zahnriemenübersetzung oder dergleichen zu ersetzen und das Einlauftransportband 5 damit an den einlaufseitigen Antriebsmotor 25 derart zu koppeln, dass das Einlauftransportband 5 stets schneller läuft als das Sägezahnsternrad 3.

Das Zuförderband 9 kann zudem schneller laufen als das Einlauftransportband 5, sodass am Eingang zum Überschub 8 ein vorgelagerter Staudruck erzeugt wird. Diese vorgelagerte Staudruckstufe dient dazu, den im Bereich des Sägezahnsternrads 3 verbleibenden Staudruck zu reduzieren. Dadurch lässt sich der Staudruck am Sägezahnsternrad 3 besonders präzise und reproduzierbar einstellen. Außerdem können die Transportbänder 5, 6 des Behältereinlaufs BEF und des Behälterauslaufs BAF dann zu einem durchgehenden Transportband 5 zusammengefasst werden.

Wie die Figur 4 erkennen lässt, umfasst das Sägezahnsternrad 3 eine Vielzahl von Sägezähnen 27 mit je einer steilen Zahnflanke 27a und einer demgegenüber flacheren Zahnflanke 27b. Die steilen Zahnflanken 27a weisen in Transportrichtung 7 und nehmen die Behälter 2 in zwischen den Zahnflanken 27a, 27b ausgebildeten Transporttaschen 28 mit. Der Abstand der Transporttaschen 28 zueinander entspricht der Transportteilung TT des Behandlungstisches 1, in der Figur 4 stellvertretend dargestellt am Auslaufsternrad 4. Die jeweils in Transportrichtung 7 weisende Zahnflanke 27a wird auch Zahnbrust genannt, die entgegengesetzte Zahnflanke 27b Zahnrücken.

Für einen Formatwechsel sind die Sägezähne 27 und Transporttaschen 28 vorzugsweise in schnell auswechselbare Garniturenteile integriert. Derartige Garniturenteile können beispielsweise als von oben aufsetzbare Kränze oder in Form von zwei sich ergänzenden Halbkränzen zur seitlichen Montage ausgebildet sein.

Die steilen Flanken 27a bilden die in Transportrichtung 7 gesehen hinteren Wände der Transportaschen 28 aus. Zwischen den steilen und den flacheren Flanken 27a, 27b sind Zahnspitzen 27c derart ausgebildet, dass die Sägezähne 27 schaufelartig zwischen je zwei unter Staudruck antransportierte Behälter 2 eingreifen und die Behälter 2 in den Transporttaschen 28 mitnehmen.

Die Zuführung der Behälter 2 zum Sägezahnsternrad 5 kann durch ein passiv einrastendes oder aktiv schaltendes und insbesondere sternförmig ausgebildetes Schaltrad 29 unterbrochen werden. Dieses arbeitet als Sperrstern, der die Behälterzufuhr gesteuert freigibt oder stoppt, letzteres beispielsweise zum Leerfahren der Behandlungsmaschine 1. Anstelle des Schaltrads 29 wären auch andere Sperrmittel denkbar, wie beispielsweise passiv einrastende oder aktiv geschaltete Nocken, Wippen oder dergleichen.

Das Einlauftransportband 5 umfasst vorzugsweise eine bogengängigen Transportkette mit um vertikale Achsen relativ zueinander schwenkbaren Kettengliedern 30. Die Kettenglieder 30 bilden dann vorzugsweise eine Standfläche für die Behälter 2 aus. Das Einlauftransportband 5 bildet somit stromaufwärts des Sägezahnsternrads 3 einen Transportbandbogen aus. Dieser kann einen einheitlichen Krümmungsradius aufweisen oder aus Bogensegmenten 5a, 5b mit unterschiedlichen Krümmungsradien R1, R2 zusammengesetzt sein. Die Transportkette ist dann für sämtliche verwendeten Krümmungsradien R1, R2 geeignet. Dadurch kann der Verlauf des Einlauftransportbands 5 bzw. der Transportkette an die vorgegebene Transportbahn 14 der Behälter 2 angepasst werden.

Bei Frontalaufstellung ist das Auslauftransportband 6 entsprechend als bogengängige Kette ausgebildet und bildet stromabwärts des Auslaufsternrads 4 einen Transportbandbogen aus.

Die Figur 5 verdeutlicht die Funktionsweise des Sägezahnsterns 3 bei der Übernahme der Behälter 2 vom Einlauftransportband 5 und beim Einteilen der Behälter 2 auf die Transportteilung TT bei den Ausführungsformen 100, 200, 300.

Die Behälter 2 laufen auf dem Einlauftransportband 5 stehend und seitlich vom ausgangsseitigen Abschnitt 19b der Behälterführung 19 geführt mit einem Winkel 15 bezogen auf die Frontalausrichtung 12 an der Übergabestelle 13 auf je einem Zahnrücken bzw. einer Flanke 27b auf.

Zu diesem Zweck läuft das Einlauftransportband 5 in Transportrichtung 7 um beispielsweise 1 bis 5% schneller als das Sägezahnsternrad 3. Folglich wird der aufgelaufene Behälter 2 auch während der kontinuierlichen Drehung des Sägezahnsternrads 3 mit einem definierten Staudruck an den Abschnitt 19b der Behälterführung 19 und an den Zahnrücken bzw. die Flanke 27b gedrückt und folgt letzterer im Kontakt.

Dabei rutscht der Behälter 2 zunehmend in die Transporttasche 28 und wird schließlich formschlüssig von der nachfolgenden Zahnbrust bzw. der Flanke 27a mitgenommen. Dies ermöglicht eine schonende Übergabe der Behälter 2 an den Sägezahnstern 3 unter gleichzeitiger Herstellung der Transportteilung TT. Die Kontur der Transporttaschen 28 ist an den Querschnitt der Behälter 2 angepasst.

Der Winkel 15 wird beispielsweise in Abhängigkeit vom Radius 2a des Behälters 2, dem Radius des Teilkreises 3a und der Transportteilung TT vorgegeben, ebenso Kontur und Abstand der Sägezähne 27 voneinander. Der Winkel 15 wird im Betrieb insbesondere mittels der Behälterführungen 18, 19 eingehalten.

Mit den beschriebenen Ausführungsformen 100, 200, 300 der Behandlungsmaschine kann wie folgt gearbeitet werden:
Ein Strom aus zu behandelnden Behältern 2 wird kontinuierlich mit dem Zuförderband 9 in den Bereich des Behälterüberschubs 8 transportiert und mittels der Behälterführungen 18, 19 auf das Einlauftransportband 5 übergeschoben.

Das Einlauftransportband 5 läuft vorzugsweise mit einer um beispielsweise 1 bis 5% höheren Transportgeschwindigkeit als das Sägezahnsternrad 3, der Behandlungstisch 1 und das Auslaufsternrad 4. Dadurch werden die Behälter 2 unter einem vorgegebenen Staudruck dem Sägezahnsternrad 3 zugeführt. Das Zuförderband 8 kann beispielsweise um 10 bis 15% schneller laufen als das Sägezahnsternrad 3 und/oder um 5 bis 10% schneller als das Einlauftransportband 5.

Der jeweils vorderste Behälter 2 läuft an der Übergabestelle 13 auf einen Zahnrücken bzw. eine Flanke 27b eines Sägezahns 27 auf und rutscht unter beidseitig seitlicher Führung in eine Transporttasche 28 des Sägezahnsternrads 3. Der Behälter 2 wird dadurch vereinzelt und von der nachfolgenden Zahnbrust bzw. Zahnflanke 27a in der Transporttasche 28 formschlüssig mitgenommen. Der Abstand der Transporttaschen 28 legt hierbei eine Transportteilung TT der Behälter 2 fest, die derjenigen des Behandlungstisches 1 entspricht.

Die Übergabe der Behälter 2 vom Einlauftransportband 5 an das Sägezahnsternrad 3 erfolgt im Wesentlichen auf einer an die Kontur des Sägezahnsternrads 3 angepassten Kurvenbahn entlang der seitlichen Behälterführung 19, wobei diese Kurvenbahn vorzugsweise tangential in den Einlaufteilkreis 3a des Sägezahnsternrads 3 übergeht. Vom Sägezahnsternrad 3 werden die Behälter 2 auf an sich bekannte Weise tangential zum Behandlungsteilkreis 1a an den Behandlungstisch 1 übergeben und auf diesem in geeigneten Halterungen, beispielsweise zwischen Drehtellern und Zentrierglocken, für eine nachfolgende Behandlung, wie beispielsweise eine Etikettierung oder ein Direktbedrucken, stehend eingespannt.

Nach erfolgter Behandlung werden die Behälter 2 auf bekannte Weise tangential an das Auslaufsternrad 4 übergeben und von diesem dem Auslauftransportband 6, 16 zugeführt. Dieses läuft vorzugsweise mit der Transportgeschwindigkeit des Behandlungstisches 1 und übergibt die behandelten Behälter 2 im Bereich des Überschubs 10 an das Abförderband 11.

Die Vereinzelung der Behälter 2 mittels Sägezahnsternrad 3 schont die Seitenwände von Kunststoffbehältern und erübrigt den Einsatz zusätzlicher Einteilschnecken oder dergleichen. Ferner ermöglicht das bogenförmige Einlauftransportband 5 eine kompakte Frontalausrichtung oder Parallelausrichtung des Behältereinlaufs BEF, BEP mit einer reduzierten Anzahl aktiver Antriebskomponenten, wie beispielsweise Sternräder oder dergleichen. Zudem kann die Anzahl der bei einem Formatwechsel auszutauschender Behälterführungen gegenüber herkömmlichen Behandlungsmaschinen reduziert werden.

Sägezahnsternrad 3, Auslaufsternrad 4 und Behälterführungen 18 bis 22 können beim Formatwechsel als Garniturenteile mit einem geringen apparativen Aufwand und mit wenigen Handgriffen ausgetauscht werden.

Der Staudruck kann beispielsweise durch Anpassen der Transportgeschwindigkeit des Einlauftransportbands 5 und/oder der Transportgeschwindigkeit des Zuförderbands 9 für eine zuverlässige und schonende Einteilung und Zuführung der Behälter 2 zum Sägezahnsternrad 3 flexibel und einfach eingestellt werden.

## Patentansprüche

1. Behandlungsmaschine (100, 200) für Behälter (2), mit einem drehbaren Behandlungstisch (1) und einem Behältereinlauf in Frontalausrichtung (BEF) oder Parallelausrichtung (BEP), ferner umfassend: ein Sägezahnsternrad (3), das zum Vereinzeln einlaufender Behälter (2) auf Transportteilung (TT) des Behandlungstisches (1) und zur tangentialen Übergabe der Behälter (2) an den Behandlungstisch (1) ausgebildet ist; und ein Einlauftransportband (5) mit wenigstens einer seitlichen Behälterführung (19) zur Übergabe der Behälter (2) an das Sägezahnsternrad (3), **dadurch gekennzeichnet, dass** das Einlauftransportband (5) und die seitliche Behälterführung (19) mit seitlicher Krümmung (KE) zum Sägezahnsternrad (3) verlaufen und das Einlauftransportband (5) derart ausgebildet ist, dass es zusammen mit dem Einlaufteilkreis (3a) des Sägezahnsternrads (3) eine S-förmige Transportbahn (14) für die Behälter (2) festlegt.

2. Behandlungsmaschine nach Anspruch 1, wobei das Einlauftransportband (5) in Form aneinandergereihter Bogensegmente (5a, 5b) mit insbesondere unterschiedlichen Krümmungsradien (R1, R2) ausgebildet ist.

3. Behandlungsmaschine nach einem der vorigen Ansprüche, wobei das Einlauftransportband (5) derart seitlich gekrümmt ist, dass die Transportbahn (14) der Behälter (3) an einer Übergabestelle (13) zum Sägezahnsternrad (3) in einem horizontalen Winkel (15) von 15° bis 85° bezüglich Frontalausrichtung (12) verläuft.

4. Behandlungsmaschine nach wenigstens einem der vorigen Ansprüche, wobei die seitliche Behälterführung (19) derart ausgebildet ist, dass sie die Behälter (2) bei der Übergabe an das Sägezahnsternrad (3) zuerst gegen daran ausgebildete Zahnrücken (27b) führt.

5. Behandlungsmaschine nach wenigstens einem der vorigen Ansprüche, wobei das Einlauftransportband (5) als horizontal bogengängige Transportkette ausgebildet ist, insbesondere mit um vertikale Achsen schwenkbaren Kettengliedern (30).

6. Behandlungsmaschine nach wenigstens einem der vorigen Ansprüche, wobei ein eingangsseitiger Abschnitt (5c) des Einlauftransportbands (5) in Frontalausrichtung (12) verläuft.

7. Behandlungsmaschine nach wenigstens einem der vorigen Ansprüche, ferner mit einem Behälterüberschub (8), an dem das Einlauftransportband (5) an ein stromaufwärts in Frontalausrichtung (12) verlaufendes Zuförderband (9) anschließt.

8. Behandlungsmaschine nach Anspruch 7, wobei das Zuförderband (9) derart antreibbar ist, dass es im Behandlungsbetrieb schneller läuft als das Sägezahnsternrad (3), insbesondere um mindestens 5%.

9. Behandlungsmaschine nach wenigstens einem der vorigen Ansprüche, wobei das Einlauftransportband (5) derart antreibbar ist, dass es im Behandlungsbetrieb schneller läuft als das Sägezahnsternrad (3), insbesondere um höchstens 5%.

10. Behandlungsmaschine nach wenigstens einem der vorigen Ansprüche, ferner mit einem Behälterauslauf in Frontalausrichtung (BAF), in dem ein Auslaufsternrad (4) ausgebildet ist sowie ein Auslauftransportband (6), das mit seitlicher Krümmung (KA) vom Auslaufsternrad (4) weg verläuft.

11. Behandlungsmaschine nach wenigstens einem der Ansprüche 1 bis 9, ferner mit einem Behälterauslauf in seitlicher Standardausrichtung (BAS), in dem ein Auslaufsternrad (4) ausgebildet ist sowie ein Auslauftransportband (16), das geradlinig vom Auslaufsternrad (4) weg verläuft.

12. Behandlungsmaschine nach Anspruch 11 oder 10, wobei für das Einlauftransportband (5) und das Auslauftransportband (6, 16) ein gemeinsamer Antriebsmotor (24, 26) vorhanden ist.

13. Verfahren zum Zuführen eines in Frontalausrichtung (12) oder Parallelausrichtung (17) einlaufenden Stroms aus Behältern (2), insbesondere Kunststoffflaschen, zu einem rotierenden Behandlungstisch (1), **dadurch gekennzeichnet, dass** die Behälter mittels eines Sägezahnsterns (3) von einem mit seitlicher Krümmung (KE) zum Sägezahnsternrad (3) verlaufenden Einlauftransportband (5) unter Staudruck einzeln übernommen, in Transporttaschen (28) des Sägezahnsterns (3) auf eine Transportteilung (TT) des Behandlungstisches (1) gebracht und tangential an den Behandlungstisch (1) geführt werden, und wobei die Behälter (2) bei der Übernahme vom Einlauftransportband (5) auf den Transporttaschen (28) jeweils vorauslaufenden Zahnflanken (27b) des Sägezahnsterns (3) auflaufen und von einer am Einlauftransportband (5) ausgebildeten und mit der seitlichen Krümmung (KE) zum Sägezahnsternrad (3) verlaufenden seitlichen Behälterführung (19) in die Transporttaschen (28) geleitet werden, wobei das Einlauftransportband (5) zusammen mit dem Einlaufteilkreis (3a) des Sägezahnsternrads (3) eine S-förmige Transportbahn (14) für die Behälter (2) festlegt.

## Claims

1. Machine (100, 200) for handling containers (2), comprising a rotatable handling table (1) and a container inlet in frontal orientation (BEF) or parallel orientation (BEP), further comprising a sawtooth star wheel (3) for separating incoming containers (2) at transport pitch (TT) of the handling table (1) and for the tangential transfer of the containers (2) onto the handling table (1); and an inlet conveyor belt (5) with at least one lateral container guide (19) for transferring the containers (2) to the sawtooth star wheel (3), **characterized in that** the inlet conveyor belt (5) and the lateral container guide (19) run with lateral curvature (KE) to the saw-tooth star wheel (3), and the inlet conveyor belt (5) is designed such that together with the inlet pitch (3a) of the sawtooth star wheel (3) it defines an S-shaped transport path (14) for the containers (2).

2. Handling machine according to claim 1, wherein the inlet conveyor belt (5) is constructed in the form of arc segments (5a, 5b) arranged in a row and having in particular different radii of curvature (R1, R2).

3. Handling machine according to one of the previous claims, wherein the inlet conveyor belt (5) is curved laterally in such a way that the transport path (14) of the containers (3) runs at a transfer point (13) to the sawtooth star wheel (3) at a horizontal angle (15) of 15° to 85° with respect to the frontal orientation (12).

4. Handling machine according to at least one of the previous claims, wherein the lateral container guide (19) is designed in such a way that it guides the containers (2) during transfer to the sawtooth star wheel (3) first against tooth backs (27b) formed thereon.

5. Handling machine according to at least one of the previous claims, wherein the inlet conveyor belt (5) is designed as a horizontally bendable transport chain, in particular with chain links (30) pivotable about vertical axes.

6. Handling machine according to at least one of the previous claims, wherein an inlet-side section (5c) of the inlet conveyor belt (5) extends in frontal orientation (12).

7. Handling machine according to at least one of the previous claims, further comprising a container transfer (8), at which the inlet conveyor belt (5) adjoins a feed conveyor belt (9) running upstream in frontal orientation (12).

8. Handling machine according to claim 7, wherein the feed conveyor belt (9) can be driven in such a way that it runs faster than the sawtooth star wheel (3), in particular at least 5% faster, during handling operation.

9. Handling machine according to at least one of the previous claims, wherein the inlet conveyor belt (5) can be driven in such a way that it runs faster than the sawtooth star wheel (3), in particular by at most 5%, during handling operation.

10. Handling machine according to at least one of the previous claims, further comprising a container outlet in frontal orientation (BAF), in which an outlet star wheel (4) is formed, as well as an outlet conveyor belt (6), which runs with lateral curvature (KA) away from the outlet star wheel (4).

11. Handling machine according to at least one of claims 1 to 9, further comprising a container outlet in lateral standard orientation (BAS), in which an outlet star wheel (4) is formed, as well as an outlet conveyor belt (16), which extends in a straight line away from the outlet star wheel (4).

12. Handling machine according to claim 11 or 10, wherein a common drive motor (24, 26) is provided for the inlet conveyor belt (5) and the outlet conveyor belt (6, 16).

13. Method for feeding a stream of containers (2), in particular plastic bottles, arriving in frontal orientation (12) or parallel orientation (17), to a rotating handling table (1), **characterized in that** the containers are taken over individually under back pressure by means of a sawtooth star wheel (3) from an inlet conveyor belt (5) extending with lateral curvature (KE) to the sawtooth star wheel (3), are brought in transport pockets (28) of the sawtooth star wheel (3) onto a transport pitch (TT) of the handling table (1) and are guided tangentially to the handling table (1), and wherein the containers (2), on being taken over from the inlet conveyor belt (5), run up on the respective leading tooth flanks (27b) of the sawtooth star wheel (3) on the transport pockets (28) and are guided into the transport pockets (28) by a lateral container guide (19) formed on the inlet conveyor belt (5) and extending with lateral curvature (KE) to the sawtooth star wheel (3), wherein the inlet conveyor belt (5) together with the inlet pitch (3a) of the sawtooth star wheel (3) defines an S-shaped transport path for the containers (2).

## Revendications

1. Machine de traitement (100, 200) pour récipients (2), avec une table de traitement rotative (1) et une entrée de récipients en orientation frontale (BEF) ou parallèle (BEP), comprenant en outre une roue en étoile à dents de scie (3), qui est conçue pour séparer les récipients (2) entrants au pas de transport (TT) de la table de traitement (1) et pour transférer tangentiellement les récipients (2) vers la table de traitement (1); et un convoyeur d'entrée (5) avec au moins un guide latéral de récipients (19) pour le transfert des récipients (2) à la roue en étoile à dents de scie (3), **caractérisé en ce que** la roue en étoile à dents de scie (3) est conçue pour le transfert des récipients (2) à la roue en étoile à dents de scie (3), **en ce que** le convoyeur d'entrée (5) et le guide latéral des récipients (19) se déplacent avec une courbure latérale (KE) vers la roue en étoile à dents de scie (3) et le convoyeur d'entrée (5) est conçu pour définir, avec le cercle primitif d'entrée (3a) de la roue en étoile à dents de scie (3), une voie de transport en forme de S (14) pour les récipients (2).

2. Machine de traitement selon la revendication 1, dans laquelle le convoyeur d'entrée (5) est conçue sous la forme de segments arqués (5a, 5b) disposés en ligne et ayant en particulier des rayons de courbure différents (R1, R2).

3. Machine de traitement selon l'une des revendications précédentes, dans laquelle le convoyeur d'entrée (5) est incurvé latéralement de telle sorte que le chemin de transport (14) des récipients (3) passe en un point de transfert (13) à la roue en étoile en dents de scie (3) selon un angle horizontal (15) de 15° à 85° par rapport à l'orientation frontale (12).

4. Machine de traitement selon au moins l'une des revendications précédentes, dans laquelle le guide latéral des récipients (19) est conçu de telle manière qu'il guide les récipients (2) lors du transfert vers la roue en étoile à dents de scie (3) d'abord contre les dos de dents (27b) formés sur celle-ci.

5. Machine de traitement selon au moins une des exigences ci-dessus, dans laquelle le convoyeur d'entrée (5) est conçu comme chaîne de transport en arc de cercle horizontale, en particulier avec des maillons de chaîne (30) pouvant pivoter autour d'axes verticaux.

6. Machine de traitement selon au moins une des exigences ci-dessus, dans laquelle une section (5c) du convoyeur d'entrée (5) du côté de l'entrée s'étend en alignement frontal (12).

7. Machine de traitement selon au moins une des exigences ci-dessus, comprenant en outre un transfert de récipients (8), au niveau duquel le convoyeur d'entrée (5) est relié à un convoyeur d'alimentation (9) circulant en amont dans un alignement frontal (12).

8. Machine de traitement selon la revendication 7, **caractérisée en ce que** la convoyeur d'alimentation (9) peut être entraînée de telle sorte qu'elle tourne plus vite que la roue en étoile à dents de scie (3), en particulier d'au moins 5 %, pendant l'opération de traitement.

9. Machine de traitement selon au moins l'une des revendications précédentes, dans laquelle le convoyeur d'entrée (5) peut être entraînée de telle sorte qu'elle tourne plus vite que la roue d'étoile à dents de scie (3) en opération de traitement, en particulier de 5 % au maximum.

10. Machine de traitement selon au moins une des revendications précédentes, comprenant en outre une sortie de récipient en alignement frontal (BAF), dans laquelle est formée une étoile de sortie (4), ainsi qu'un convoyeur de sortie (6), qui s'éloigne de l'étoile de sortie (4) avec une courbure latérale (KA).

11. Machine de traitement selon au moins une des revendications 1 à 9, comprenant en outre une sortie de récipient en orientation latérale standard (BAS), dans laquelle est formée une étoile de sortie (4), ainsi qu'un convoyeur de sortie (16), qui s'étend en ligne droite à partir de l'étoile de sortie (4).

12. Machine de traitement selon les revendications 11 ou 10, dans laquelle un moteur d'entraînement commun (24, 26) est prévu pour le convoyeur d'entrée (5) et le convoyeur de sortie (6, 16).

13. Procédé d'alimentation d'un flux de récipients (2), en particulier de bouteilles en plastique, arrivant en alignement frontal (12) ou en alignement parallèle (17), vers une table de traitement rotative (1), **caractérisé en ce que** le convoyeur d'entrée (5) est muni d'un moteur d'entraînement commun (24, 26), **en ce que** les récipients sont repris individuellement sous contre-pression au moyen d'une étoile en dents de scie (3) à partir d'un convoyeur d'entrée (5) à courbure latérale (KE) vers l'étoile en dents de scie (3), sont amenés dans des poches de transport (28) de l'étoile en dents de scie (3) sur une division de transport (TT) de la table de traitement (1) et sont guidés tangentiellement à la table de traitement (1), et dans lequel les récipients (2), lors de leur prise en charge par le convoyeur d'entrée (5), arrivent sur les poches de transport (28) situées sur les flancs de dents avant respectifs (27b) de l'étoile à dents de scie (3) et sont guidés dans les poches de transport (28) par un guide latéral de récipients (19) formé sur le convoyeur d'entrée (5) et s'étendant avec la courbure latérale (KE) vers l'étoile à dents de scie (3), dans lequel le convoyeur d'entrée (5) définit, avec le cercle primitif d'entrée (3a) de la roue en étoile à dents de scie (3), un chemin de transport en forme de S (14) pour les récipients (2).
